# EUROPEAN PATENT APPLICATION

(11) **EP 3 219 478 A1**
(43) Date of publication of application: **20.09.2017**
(21) Application number: 16161235.3
(22) Date of filing: 18.03.2016
(51) Int. Cl.: B29D 30/00, B29D 30/72, B60C 13/00, B23K 26/08, B23K 26/03

(54) **TIRE MARKING DEVICE, METHOD OF OPERATING A TIRE MARKING DEVICE AND CONTROL DEVICE FOR A TIRE MARKING DEVICE**

(71) Applicant: 4JET Technologies GmbH, 52477 Alsdorf (DE)
(72) Inventor: KRAUS, Armin, 52134 Herzogenrath (DE); TEPPE, Dirk, 52249 Eschweiler (DE)
(74) Representative: Dilg, Haeusler, Schindelmann Patentanwaltsgesellschaft mbH

(57) **Abstract**

A tire marking device comprises a control device (114); a laser device (106); a tire positioning device (102) for positioning a first tire (108) with respect to the laser device (106) into a treatment position (111) to allow a marking of a marking region (110) of the first tire (108) with the laser device (106); an intermediate transport supply device (104), the intermediate transport supply device (104) being configured to be located for providing a second tire (136) to the tire positioning device (102); and a control device (114), the control device (114) being configured for operating the intermediate transport supply device (102) and the positioning device (102) in order to move the second tire (136) to the treatment position (111) and simultaneously remove the first tire (108) from the treatment position (111). The invention also relates to a method and to a control device for operating a tire marking device.

## Description

### FIELD OF INVENTION

The present invention relates to the field of tire marking devices.

### BACKGROUND

WO 2005/000714 A1 discloses a system for the marking of tires comprising a plurality of stations which are connected by a tire transport mechanism such as a conveyor or other apparatus for moving a cured tire between the stations. Further, a modified system is described comprising various stations and individual conveyor sections which are synchronized through a control unit so that a plurality of tires move in unison and at a known rate through the entire system on the various conveyors. Further described is an escapement device or control gate which controls the spacing of a plurality of tires and ensures that only a single tire passes to the next station and apparatus.

US 7 295 948 B2 discloses a single station system in which the following steps are processed one after another: conveying of the tire; centering below a swivel arm scanning the sidewall; selecting a marking spot; laser engraving; verifying the marking. Further described is a multistation system in which a tire is continuously transported through the system without slip by the conveyor belt where a rotational axis of the swivel arm is kept collinear with the tire's center. Further described is the laser station being shielded by protective walls and automatic doors, to confine stray radiation or odorous fumes and vapors.

### SUMMARY

Compared to a step-by-step processing of a tire marking device a continuous transport of the tire through a marking system decreases the cycle time required for the processing of a single tire but may be difficult to realize.

In view of the above-described situation, there still exists a need for an improved technique that enables to provide a tire marking device, while substantially avoiding or at least reducing one or more of the above-identified problems.

This need may be met by the subject matter according to the independent claims. Advantageous embodiments of the herein disclosed subject matter are described by the dependent claims.

According to an embodiment of a first aspect of the herein disclosed subject matter there is provided a tire marking device, the tire marking device comprising: a laser device; a tire positioning device for positioning a first tire with respect to the laser device into a treatment position to allow a marking of a marking region of the first tire with the laser device; an intermediate transport supply device, the intermediate transport supply device being configured for providing a second tire to the tire positioning device; and a control device, the control device being configured for operating the intermediate transport supply device and the positioning device in order to move the second tire to the treatment position and simultaneously remove the first tire from the treatment position.

According to an embodiment of a second aspect of the herein disclosed subject matter there is provided a method of operating a tire marking device, the tire marking device comprising: a laser device; a tire positioning device for positioning a first tire with respect to the laser device into a treatment position to allow a marking of the first tire with the laser device; an intermediate transport supply device, the intermediate transport supply device being located for providing a second tire to the tire positioning device; the method comprising: operating the intermediate transport supply device and the positioning device in order to move the second tire to the treatment position and simultaneously remove the first tire from the treatment position.

According to an embodiment of a third aspect of the herein disclosed subject matter there is provided a computer program product comprising a program element which is configured for, when carried out on a processor device, executing a method according to the second aspect or and embodiment thereof.

According to an embodiment of a fourth aspect of the herein disclosed subject matter there is provided a control device for a tire marking device, the control device being configured for operating a tire marking device according to a method of the second aspect or and embodiment thereof.

### DESCRIPTION OF EXEMPLARY EMBODIMENTS

In the following, exemplary embodiments of the herein disclosed subject matter are described, any number and any combination of which may be realized in an implementation of aspects of the herein disclosed subject matter.

It is noted, that the terms "first tire", "second tire" and "third tire" are used herein just to distinguish three subsequent tires, namely the second tire which follows the first tire and the third tire which precedes the first tire. Hence, the terms "first", "second", and "third" must not be interpreted as referring to a particular or a particularly configured a tire but rather serve only to distinguish in the course of description of embodiments three individual tires out of a plurality of tires that are transported through the tire marking device for marking of these tires.

According to embodiments of the first aspect, the tire marking device is adapted for providing the functionality of one or more of the herein disclosed embodiments and/or for providing the functionality as required by one or more of the herein disclosed embodiments, in particular of the embodiments of the second, third and fourth aspect disclosed herein.

According to embodiments of the second aspect, the method is adapted for providing the functionality of one or more of the herein disclosed embodiments and/or for providing the functionality as required by one or more of the herein disclosed embodiments, in particular of the embodiments of the first, third and fourth aspect disclosed herein.

According to embodiments of the third aspect, the computer program product is adapted for providing the functionality of one or more of the herein disclosed embodiments and/or for providing the functionality as required by one or more of the herein disclosed embodiments, in particular of the embodiments of the first, second and fourth aspect disclosed herein.

According to embodiments of the fourth aspect, the control device is adapted for providing the functionality of one or more of the herein disclosed embodiments and/or for providing the functionality as required by one or more of the herein disclosed embodiments, in particular of the embodiments of the first, second and third aspect disclosed herein.

The above mentioned aspects are based on the idea that the cycle time per tire required for processing can be reduced by a simultaneously providing a subsequent tire to the positioning device and at the same time remove a preceding tire from the positioning device.

The control device may be implemented by at least one of mechanics, hardware and software. For example, the control device may comprise a processor device which, upon executing a program element, carries out a method according to the second aspect or an embodiment thereof.

According to an embodiment, the tire positioning device may comprise a single positioning element or, in another embodiment may comprise two or more positioning elements. For example, according to an embodiment the positioning device comprises as a first positioning element a conveyor for positioning a tire in a conveying direction and a second positioning element, e.g. a centering device such as a centering clamp, for positioning the tire crosswise, e.g. perpendicular, to the conveying direction. According to an embodiment, the intermediate transport supply device may also include one or more positioning elements, e.g. a pre-centering device.

According to an embodiment, the laser device is rotatable about an axis of rotation which is perpendicular to a conveying plane defined by the conveyor in order to allow adjustment of the laser device into the desired angular position with respect to the tire on the tire positioning device. Further according to an embodiment, the laser device may be movable in a direction parallel to the axis of rotation in order to adjust a distance between the laser device and the tire being located on the tire positioning device. According to a further embodiment, the laser device is movable so as to vary the distance of the laser device from the axis of rotation about which the laser device is rotatable. One or more actuators may be provided for adjustment of the laser device, in particular for adjustment according to one or more embodiments described herein (e.g. above). In this regard, according to an embodiment any reference to the laser device is considered as a reference to a processing head of the laser device. However, it should be understood that according to other embodiments other positioning elements or other actuators may be provided. For example, instead of a centering clamp a gripper may be provided, in particular a gripper capable of lifting and rotating the tire into a desired position (e.g. the desired position may include a desired angular position and/or a desired height position (distance of the tire from the conveyor, from ground, etc.).

According to an embodiment, tires are conveyed with the tire axis perpendicular to the conveying direction, in particular with the tire axis pointing in a vertical direction. This is the common implementation of a conveying device in the field of tire marking. However, a person or ordinary skill in the art easily recognizes that the concepts disclosed herein may also be applied to conveying device which convey tires in different, e.g. vertical orientation where the tire axis is pointing in horizontal direction.

According to an embodiment, the control device is configured for operating the intermediate transport supply device depending on a type of the first tire and/or the second tire, wherein the type of the respective tire comprises at least one of: (i) a diameter of the tire perpendicular to the tire axis of rotation; (ii) a width of the tire parallel to the tire axis of rotation; (iii) a radial distance of the marking region from the tire axis of rotation.

The type of the first tire and the second tire may be provided in any suitable way, e.g. by manually inputting the type of tire, by determining the type of the tire by performing suitable measurements on the tire, by determining the type of the tire by reading out a digital code pattern such as a bar code or a QR code which may be provided e.g. by a label adhered to the respective tire, an RFID (radio-frequency identification) chip, etc. Accordingly, the tire marking device may comprise a user interface, such as a keyboard or a pointing device for allowing manually inputting the type of the tire. According to another embodiment, the method tire marking device may comprise one or more measuring devices for determining the type of the tire by measuring at least one characteristic of the tire, such as a diameter of the tire, a width of the tire, etc. According to a further embodiment, the tire marking device may comprise a digital code reading device such as a bar code reader or a QR code reader. In such a case the control device may be configured for determining the type of the tire from the digital code read, e.g. by accessing a database, look-up table, etc.

Operating the intermediate transport supply device depending on the determined type of the first tire and/or the second tire may comprise one or more of the following: If the first tire has a first diameter larger than a second diameter of the second tire, providing the second tire to the positioning device not before the first tire on the positioning device is sufficiently spaced from the second tire such that the first tire is released from the tire positioning device if the second tire is in the treatment position; if the first tire has a first width and the second tire has a second width larger than the first width, providing the second tire to the positioning device so as to allow the laser device to move out of the range of the second tire before the second tire reaches the treatment position.

For example, if the first tire has a diameter larger than that of the second one according to an embodiment there is provided for a sufficient distance of the second tire from the first tire such that the first tire is released from the tire positioning device if the second tire is in the treatment position.

If the tires have different width, the second tire is provided to the positioning device in a manner (e.g. by accordingly operating the transport devices, in particular the intermediate transport supply device) that a collision of the second tire with the laser device is avoided, e.g. by allowing the laser device to move out of the range of the second tire before the second tire reaches the treatment position. For example, according to an embodiment, the second tire is provided to the positioning device e.g. at a suitable instant in time, at a suitable distance from the first tire, etc.

According to an embodiment, the control device is configured for operating the intermediate transport supply device for transporting the second tire towards the positioning device before operating the positioning device for removal of the first tire from the treatment position. For example, it may be advantageous to transport the second tire to an end of the intermediate transport supply device which is facing the positioning device. Hence, a decision of the control device to provide the second tire to the positioning device results in a handover of the tire from the intermediate transport supply device to the positioning device with very low latency.

According to an embodiment, a transport device as disclosed herein (e.g. the intermediate transport supply device and/or the positioning device) may comprise a conveyor. Generally, a conveyor is considered to be a device which comprises at least one moving element for conveying a tire, e.g. a conveyor belt, a conveyor chain, driven rollers, etc. For example, according to an embodiment a transport device as disclosed herein may be e.g. a chain conveyor or a belt conveyor. For example, according to an embodiment the intermediate transport supply device comprises a first conveyor, in particular a first conveyor belt and the tire positioning device comprises a second conveyor, in particular a second conveyor belt. According to an embodiment, the conveyor belt may comprise rollers which allow movement of the tire crosswise the conveying direction. Such conveyor belts are available from Intralox, www.intralox.com, under the Trademark "Activated Roller Belt".

According to an embodiment, the second conveyor has a maximum clearance in a direction perpendicular to the conveying direction of the second conveyor; and the second conveyor has a length which is smaller than 1.3 times the maximum clearance, in particular smaller than 1.1 times the maximum clearance, or smaller than 0.9 times the maximum clearance, or smaller than 0.8 times the maximum clearance. According to an embodiment, the maximum clearance is the maximum clearance in a plane defined by the upper surface of the conveyor belt on which the tire is resting or, in other words, in a plane which includes the upper surface of the conveyor belt. For example, in accordance with an embodiment, the second conveyor (of the tire positioning device) is configured to be as short as possible, thereby allowing an increase of the throughput of the tire marking device. For example, the maximum clearance of the second conveyor may at least roughly correspond to the diameter of the largest tires that it can be marked with the tire marking device. Hence, for example if the length of the second conveyor is smaller than 0.9 times the maximum clearance this means that a tire having a diameter corresponding to the maximum clearance extends beyond both ends of the second conveyor if the tire is centered on the second conveyor in the conveying direction. It will be understood by those skilled in the art that such a short second conveyor may improve the operating speed of the entire tire marking device but at the same time requires careful coordination of the first conveyor (of the intermediate transport supply device) and the second conveyor (of the positioning device). However, a conveyor (e.g. the second conveyor) generally must be long enough (in conveying direction) in order to ensure save receipt of a tire, retaining of the tire on the second conveyor and handover of the tire to the subsequent transport device (e.g. subsequent conveyor).

Since according to an embodiment the maximum clearance is only a measure for the maximum diameter of the tire which the tire marking device is capable to mark, in such an embodiment the above limitation of the length of the second conveyor may also be understood as referring to a length of the second conveyor in the conveying direction length which is smaller than 1.3 times, smaller than 1.1 times, smaller than 0.9 times, or smaller than 0.8 times the maximum tire diameter that can be processed by the tire marking device. In other words, according to an embodiment the tire marking device is configured for a marking tires having a diameter which is less than the maximum tire diameter.

According to an embodiment, the control device is configured for operating the first conveyor (of the intermediate transport supply device) at a first maximum speed v1 during receiving the second tire from a tire supply device; and operating the first conveyor at a second maximum speed v2 during providing the second tire to the second conveyor (the conveyor of the positioning device); wherein v2 > 1.2 * v1. According to an embodiment, v2 > 1.1 * v1 or, in another embodiment, v2 > 1.3 * v1 or v2 > 1.5 * v1. According to an embodiment, the tire supply device is a device that supplies a plurality of tires to be marked sequentially to the tire marking device. For example, the tire supply device may be a device of a tire manufacturing line into which the tire marking device is integrated. According to an embodiment, the tire marking device is sold as a separate device. Nevertheless, the tire marking device may be tailored to the tire manufacturing line into which it is to be integrated. Such tailoring may be performed during the manufacturing of the tire marking device or after manufacturing of the tire marking device at a customer's premises. To this end, the tire marking device may comprise adjustment devices allowing adjustment of the tire marking device (e.g. regarding the first maximum speed v1, regarding the height of the upper surface of the intermediate transport supply device above ground, etc.) to the tire manufacturing line.

The control device may be further configured for operating the second conveyor at the maximum speed v2 during removal of the first tire from the treatment position.

It is noted that the term "speed" as used herein refers to a conveying speed, i.e. the speed by which the conveyors transport the tires. Hence, without slipping of the tires on the conveyor the speed of the conveyor is equal to the speed by which the tires are transported by the conveyor.

According to a further embodiment, the control device is configured for at least one of: operating the first conveyor for the transporting of the second tire to the second conveyor during marking of the first tire and/or during a positioning of the first tire. According to an embodiment, positioning of the first tire may be performed before marking of the tire. According to an embodiment, the second conveyor is stopped during a further positioning operation and/or marking of the first tire. According to an embodiment, the positioning is performed with the tire on or above the positioning device.

According to a further embodiment, the tire marking device further comprises an intermediate transport discharge device configured to be located for taking up marked tires from the positioning device. According to an embodiment, the intermediate transport discharge device is configured for being positioned between the positioning device and a tire discharge device to which the intermediate transport discharge device provides the marked tires. It should be understood that in some embodiments the intermediate transport discharge device may not be part of the tire marking device but may be part of a manufacturing line into which the tire marking device is to be integrated. In such a case usually the intermediate transport discharge device is not controlled by the control device of the tire marking device. According to an embodiment, the intermediate transport discharge device comprises a plurality of non-driven rollers. According to a further embodiment, the tire discharge device is part of a manufacturing line into which the tire marking device is to be integrated.

According to a further embodiment, the tire marking device further comprises a discharge clearing sensor. The discharge clearing sensor may be configured for indicating that the intermediate transport discharge device has capacity for (i.e. is capable of) taking up a tire from the tire positioning device. For example, according to an embodiment wherein the control device is configured for operating the intermediate transport discharge device (and the positioning device) for receiving a preceding, third tire (which precedes the first tire) from the positioning device only if the discharge clearing sensor indicates that the intermediate transport discharge device has capacity for taking up the third tire. According to a further embodiment, the control device is configured for operating the positioning device for providing a preceding, third tire (which precedes the first tire) from the positioning device to the intermediate transport discharge device only if the discharge clearing sensor indicates that the intermediate transport discharge device has capacity for taking up the third tire. Generally, a method of operating a tire marking device may comprise determining whether the intermediate tire discharge device has capacity for taking up a tire, e.g. by means of the above described discharge clearing sensor.

According to an embodiment, the condition that "the intermediate transport discharge device has capacity for taking up a tire (e.g. the third tire)" is that the intermediate transport is free of any preceding tire.

According to an embodiment, the control device is configured for operating the second conveyor at the second maximum speed v2 during providing the third tire to the intermediate transport discharge device.

According to a further embodiment, the tire marking device further comprises a shield for at least partially shielding laser radiation, the shield having a first opening for a transport of the tire therethrough to the treatment position and a second opening for providing the tire therethrough out of the treatment position, wherein in particular the shield extends over the positioning device and at least part of the intermediate transport supply device. In other words, according to an embodiment the shield extends beyond the positioning device. According to an embodiment, the tire marking device is free of any actively moveable shielding part for reducing or limiting the amount (power) of laser radiation exiting the shield through the first and/or second opening. For example, according to an embodiment, the tire marking device is free of any actively moveable shielding part for reducing or limiting the amount (power) of laser radiation exiting the shield through the first opening. Omitting an actively moveable shielding part at least for the first opening (or even for both openings) may provide an advantageous increase of the number of the tires that can be marked within a given time interval compared to a movable shielding part which is moved out of the transport path of the tire during transport of the tire to the treatment position and which is moved into the transport path for shielding of laser radiation during marking of the tire. According to an embodiment, the shield is a stationary shield (hence the position of the shield is fixed relative to the positioning device and/or relative to ground). According to an embodiment, the tire marking device is free of any actively moveable shielding part for reducing or limiting the amount (power) of laser radiation exiting the shield through the first opening and comprises an actively moveable shielding part for reducing or limiting the amount (power) of laser radiation exiting the shield through the second opening (e.g. a actively moveable door for selectively closing or clearing the second opening). According to an embodiment, "actively moveable" in this regards means that an actuator is provided (optionally controlled by the control device) for moving the respective part (e.g. the actively moveable shielding part).

According to an embodiment, the shield extends over at least part of the intermediate transport discharge device. Having the shield extending beyond the positioning device in both directions, i.e. over the intermediate transport supply device and over the intermediate transport discharge device increases the length of the shield and hence the distance between the openings in the shield which in turn reduces the power of the laser radiation per unit area that might exit the shield through the openings. In particular, if the laser radiation is provided by the laser device in the form of a focused beam, the focusing before the focal point results in a respective divergence of the beam after the focal point. Hence, a longer propagation path results in an increased divergence of the beam and hence in a decreased power of the beam per unit area. The same is true for stray radiation. Hence for a given laser device laser safety provisions may be realized by providing a sufficiently large shield.

According to a further embodiment, at least one curtain may be provided in order to reduce or limit the amount (power) of laser radiation exiting the shield through the first and/or second opening. According to an embodiment, a curtain is provided at the first opening and/or at the second opening of the shield. According to a further embodiment at least one curtain (e.g., a single curtain or a sequence of curtains) is provided between the first opening and the laser device and/or at least one curtain (e.g., a single curtain or a sequence of curtains) is provided between the second opening and the laser device.

As used herein, reference to a computer program product is intended to be equivalent to a reference to a computer program and/or a computer readable medium containing a program element as described herein, in particular for controlling a processor device to effect and/or coordinate the performance of a method as described herein.

The computer program may be implemented as computer readable instruction code by use of any suitable programming language, such as, for example, JAVA, C++, C#, etc. , and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

Any suitable aspect or embodiment of the herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

In the above there have been described and in the following there will be described exemplary embodiments of the subject matter disclosed herein with reference to a tire marking device, a method of operating a tire marking device, a computer program product and a controller device for a tire marking device. It has to be pointed out that of course any combination of features relating to different aspects of the herein disclosed subject matter is also possible. In particular, some features have been or will be described with reference to device type embodiments (e.g. relating to a tire marking device or a control device) whereas other features have been or will be described with reference to method type embodiments (e.g. relating to a method or a computer program product). However, a person skilled in the art will gather from the above and the following description that, unless otherwise notified, in addition to any combination of features belonging to one aspect also any combination of features relating to different aspects or embodiments, for example even combinations of features of device type embodiments and features of the method type embodiments are considered to be disclosed with this application. In this regard, it should be understood that any method feature derivable from a corresponding explicitly disclosed device feature should be based on the respective function of the device feature and should not be considered as being limited to device specific elements disclosed in conjunction with the device feature. Further, it should be understood that any device feature derivable from a corresponding explicitly disclosed method feature can be realized based on the respective function described in the method with any suitable device disclosed herein or known in the art.

The aspects and embodiments defined above and further aspects and embodiments of the herein disclosed subject matter are apparent from the examples to be described hereinafter and are explained with reference to the drawings, but to which the invention is not limited. The aforementioned definitions and comments are in particular also valid for the following detailed description and vice versa.

### BRIEF DESCRIPTION OF THE DRAWINGS

Fig. 1 shows a tire marking device according to embodiments of the herein disclosed subject matter.
Fig. 2 shows a top view of part of the tire marking device of Fig. 1.
Fig. 3 shows a speed profile of the conveying speed v(itsd) of an intermediate transport supply device versus time t as well as the speed profile of the conveying speed v(pd) of a positioning device versus time t according to embodiments of the herein disclosed subject matter.
Fig. 4 shows a further tire marking device according to embodiments of the herein disclosed subject matter.
Fig. 5 shows a further tire marking device according to embodiments of the herein disclosed subject matter.

### DETAILED DESCRIPTION

The illustration in the drawings is schematic. It is noted that in different figures, similar or identical elements are provided with the same reference signs or with reference signs which are different from the corresponding reference signs only within the first digit. Accordingly, the description of the similar or identical features is not repeated in the description of subsequent figures in order to avoid unnecessary repetitions. However, it should be understood that the description of these features in the preceding figures is also valid for the subsequent figures unless explicitly noted otherwise.

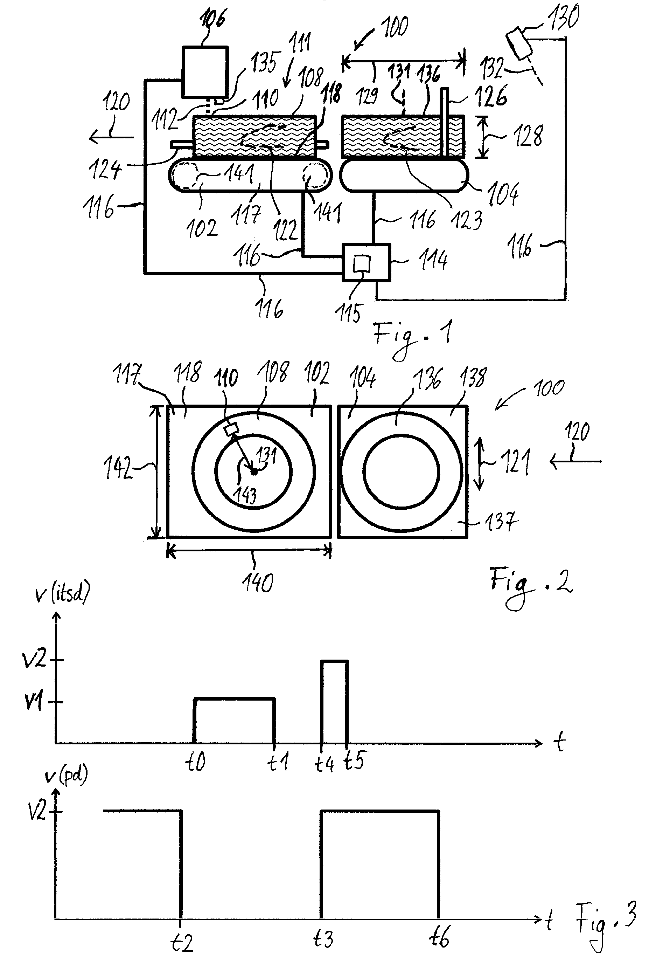

Fig. 1 shows a tire marking device 100 according to embodiments of the herein disclosed subject matter.

In accordance with an embodiment, the tire marking device 100 comprising a tire positioning device 102, an intermediate transport supply device 104, and a laser device 106. The tire positioning device 102 is configured for positioning a first tire 108 with respect to the laser device 106. Having the first tire 108 positioned in a marking position 111 allows a marking of a marking region 110 of the first tire 108 with a laser beam 112 of the laser device 106. A control device 114 is provided for controlling entities of the tire marking device, e.g. the tire positioning device 102, the intermediate transport supply device 104 and the laser device 106. To this end, respective control paths 116 may be provided. The control path 116 may be configured unidirectional, e.g. from the control device 114 to the respective entity 102, 104, 106 or may be configured bidirectional, e.g. to provide some feedback to the control device 114. According to an embodiment, the control device 114 comprises a processor device 115 for carrying out at least one program element corresponding to a respective software module which provides the functionality of the control device according to one or more embodiments of the herein disclosed subject matter and executes a method as disclosed herein. The processor device 115 may comprise one or more microprocessors and may form a network node of a network, e.g. a local network.

According to an embodiment, the positioning device 102 comprises a conveyor 117 which in turn comprises a conveyor belt 118 which is movable by a respective actuator (not shown in Fig. 1) of the conveyor 117 in order to move (or transport) the first tire 108 in a conveying direction 120 in which the tires are transported through the tire marking device 100. As is known in the art, a conveyor (e.g. the conveyor 117) may comprise two spaced apart deflection rollers 141 by which and around which the conveyor belt 118 of the conveyor 117 is guided, as shown in Fig. 1.

According to a further embodiment, the positioning device 102 may further comprise a centering clamp, indicated by a dashed line 122 in Fig. 1, for centering the first tire 108 on the conveyor belt 118 crosswise the conveying direction 120, as is known in the art. In order to assist a centering of the tire by the centering clamp 122, the conveyor belt 118 may comprise rollers that allow a (at least almost) wearless movement of the tire on the conveyor belt 118 crosswise the conveying direction 120. Likewise the intermediate transport supply device 104 may comprise a pre-centering device, indicated at 123 in Fig. 1.

According to an embodiment, a measuring device is provided for determining a position of the tire in the conveying direction 120. For example, according to an embodiment a light array 124 is provided in parallel to the conveyor belt 118 in order to determine a position of the first tire 108 in the conveying direction 120. As is known in the art, a light array may be provided by a set of light barriers defining a light array plane of the light array. In this sense, the light array 124 being parallel to the conveyor belt 118 means that the light array plane of the light array 124 is located parallel to the conveyor belt 118 (and more particularly parallel to the portion of the conveyor belt 118 on which the first tire is resting). The light array 124 may be part of the positioning device 102. Anyway, the light array 124 provides to the control device 114 (e.g. over the respective control path 116) a position signal and in accordance with an embodiment the control device 114 is configured for stopping the positioning device (e.g. stopping the conveyor belt 118) if the position signal indicates that the first tire 108 is in the treatment position 111.

In accordance with an embodiment, marking of the tire 108 is performed on the non-moving tire (i.e. with the conveyor belt 118 stopped).

According to an embodiment, a positioning of the laser device 106 and the (first) tire 108 relative to each other in a direction perpendicular to the conveyor belt 118 as well as an angular positioning of the laser device 106 and the tire relative to each other is performed by actuators of the laser device 106. Alternative concepts may grip the tire, e.g. at the bead of the tire or at the tread of the tire, and rotate the tire into a desired position. A further alternative concept may lift the tire and rotate the tire by an rotatable actuator on which the tire is resting. In the latter case, a rotary actuator of the laser device 106 may be omitted.

In a further alternative embodiment, the laser device 106 may be located below the tire. In other words and for the case that the positioning device comprises a conveyor 117 which comprises a conveyor belt 118, as shown in Fig. 1, if the tire is resting on a upper surface of the conveyor belt 118 the laser device 106 below the tire would be located facing a lower surface of the conveyor belt 118 which is opposite the upper surface. In such a case an adjustment of the laser device (or, more accurate, the laser beam of the laser device) would not need to be adjusted perpendicular to the conveyor belt 118 (i.e. in z-direction) depending on a width of the tire parallel to the axis of rotation of the tire. It should be understood that in such an embodiment, the conveyor belt is configured for allow transmission of the laser beam past the conveyor belt (e.g. by including a transparent portion in the conveyor belt, providing a split conveyor belt in which two portions are spaced to provide a gap for the transmission of the laser beam, etc.). In this regard it is mentioned that generally herein the terms "above" or "below" refer to the direction of gravity.

As it is known in the art marking of a tire with a laser device 106 may be performed by using a carbon dioxide laser, e.g. with a wavelength of 10 µm, in a continuous wave mode, with a power of 20 to 2000 Watt (W), e.g. with a power of 100 W. The required laser power depends inter alia on the size of the marking to be applied on the tire. For example, for a marking of a size of 50 mm by 50 mm a power of 400 W may be suitable. A focal distance may be between 100 and 500 millimeters (mm), in particular between 150 and 250 mm. An alternative laser type may be e.g. a YAG laser. According to an embodiment, the laser device as well as the marking provided on the tire may be as described in EP 2 905 125 A1 (our ref. J1103), EP 2 977 934 A1 (our ref. J1104). In particular, the marking may according to an embodiment be a digital code pattern such as a QR code. Further details on the marking operation and/or positioning of the laser device 106 relative to the tire 108 can be taken from EP 2 905 125 A1, EP 2 977 934 A1, and European Patent Application No. 15 186 739.7 (our ref. J1128). The entire contents of these three patent applications is incorporated herein by reference.

In order to improve the quality of the marking on the first tire 108 (e.g. of a marking in the form of a QR code) the tire marking device may comprise a sensor 135 for determining a distance between the tire 108 and the laser device 106. This may in particular be helpful in case the tire flanks are dropping downwardly, following the action of gravity. According to an embodiment, the sensor 135 may be a sheet of light sensor (e.g. as described in European Patent Application No. 15 186 739.7) or a distance sensor. According to an embodiment, the sensor 135 may be located at the processing head of the laser device 106 or remote therefrom.

According to a further embodiment, a sensor for determining a profile of the flank of the tire may be provided, e.g. in the form of a sheet of light sensor or in the form of a 3-D camera. For example, the sensor for determining a profile of the flank of the tire may be the sensor 135 described above.

Further, one or more sensors may be provided for monitoring the marking process. For example, according to an embodiment a flame sensor (not shown in Fig. 1) may be provided, the flame sensor detecting an ablation flame, thereby providing information whether or not the marking process is in progress or whether the marking process is not in progress (e.g. has ended).

According to an embodiment, the tire marking device comprises at least one measuring device for determining a type of the tire (e.g. of the first tire 108 and a second tire 136). According to an embodiment, the tire marking device 100 comprises a first measuring device 126 which is configured for measuring a width 128 of the tire (e.g. the second tire 136 in the example shown in Fig. 1) parallel to its tire axis 131. According to an embodiment, the tires are located on the tire marking device 100 in horizontal orientation, i.e. with its tire axis 131 perpendicular to the conveying direction and e.g. perpendicular to an upper surface of one or more conveyor belts (e.g. conveyor belt 118) of the tire marking device. For example, according to an embodiment the first measuring device is a light array which is positioned vertically, i.e. with a light array plane perpendicular to the conveying direction 120. According to a further embodiment, the tire marking device 100 comprises a second measuring device for measuring a diameter 129 of the tire perpendicular to its tire axis 131. For example, in accordance with an embodiment the second measuring device is a light array, e.g. the same light array 124 which is used for determining the position of the tire in the conveying direction 120. For example, according to an embodiment the light array 124 has an extent in a conveying direction 120 which is larger than the diameter of the largest tire to be marked with the tire marking device 100. The measuring devices 124, 126 for determining the type of the tire may be spaced in conveying direction 120, as shown in Fig. 1. It is noted that although the diameter 129 and the width 128 of the second tire 136 is illustrated in fig. 1, in accordance with an embodiment the diameter and/or with of each tire may be determined (e.g. from the respective type of the tire) and taking into account by the control device 114.

In accordance with a further embodiment, the tire marking device comprises a digital code sensor 130 reading a code label attached to the tires, the code label (not shown in Fig. 1) indicating in digital form the type of the tire conveyed past the digital code sensor 130. The digital code sensor 130 is coupled with the control device 114 by a control path 116. According to an embodiment, the digital code sensor 130 is configured for reading the code label optically, indicated at 132 in Fig. 1. According to an embodiment, the measuring devices, such as measuring devices 124, 126, are provided as a backup device against a wrong digital code or an erroneously read digital code.

According to an embodiment, one or more additional devices for determining the type of the tire may be provided, comprising, for example, at least one distance sensor perpendicular above the conveyor belt 118. By taking into account the position of the tire in conveying direction 120 or, in an alternative embodiment, the taking into account the conveying speed and the time period between the height signals the diameter of the tire and the diameter of the rim (bead diameter) can be measured, as well as the width 128 of the tire. It is noted that one sensor perpendicular above the conveyor belt 118 requires tires which have a defined position crosswise the conveying direction 120 (e.g. tires centered to the middle of the conveyor belt 118). Otherwise, at least two sensors perpendicular above the conveyor belt 118 are required to determine the true diameter of the tire.

Preferably, the type of the tire is determined before the tire is provided to the positioning device 102. The reason is that for optimum (close) timing of providing the tires to the positioning device 102 the type of the tire that shall be provided to the positioning device 102 should be known, as described below. According to another embodiment, the type of the tire is determined before the tire enters the tire marking device. For example, in accordance with an embodiment the digital code sensor 130 is located ahead of the intermediate transport device 104, as shown in Fig. 1.

According to an embodiment, the control device 114 is configured for operating the other devices of the tire marking device 100 depending on the type of tire determined. In particular, in accordance with an embodiment, the control device 114 operates other devices of the tire marking device 100 depending on the types of two or more subsequent tires are conveyed through the tire marking device.

Fig. 2 shows a top view of part of the tire marking device 100 of Fig. 1. In particular, shown in Fig. 2 are the positioning device 102, the intermediate transport device 104 and the first tire 108 and the second tire 136 as shown in Fig. 1. As described with regard to Fig. 1, the positioning device 102 comprises a conveyor 117 (also referred to as second conveyor) which comprises the (second) conveyor belt 118 wherein the first tire 108 rests on an upper surface of the second conveyor belt 118. In accordance with an embodiment, the intermediate transport supply device 104 comprises a conveyor 137 (also referred to as first conveyor) which in turn comprises the (first) conveyor belt 138, wherein the second tire 136 rests on an upper surface of the first conveyor belt 138.

In accordance with an embodiment, the second conveyor 117 has (in the conveying direction 120) a length 140 which is about the same as the width 142 of the second conveyor belt 118. It is noted that usually the width 142 of the second conveyor belt 118 corresponds approximately to the maximum clearance of the second conveyor 117 in a direction 121 perpendicular to the conveying direction 120 of the second conveyor 117. In the case where the second conveyor 117 comprises two spaced apart deflection rollers 141 by which and around which the conveyor belt 118 of the conveyor 117 is guided (see Fig. 1), the length of the second conveyor 117 is defined by the two deflection rollers 141 and the thickness of the conveyor belt 118 which adds additional length to the distance of the outer surface of the two deflection rollers in the conveying direction 122.

According to a further embodiment, the maximum clearance of the second conveyor 117 is defined by other elements of the second conveyor 117, e.g. lateral limiting elements of the second conveyor 117. In accordance with an embodiment, the length 140 of the second conveyor 117 is smaller than 1.3 times the width 142 of the second conveyor belt 118, in particular smaller than 1.1 times the width 142, smaller than 0.9 times the width 142, or 0.8 times the width 142 of the second conveyor belt 118.

According to an embodiment, the marking region 110 is located at a radial distance 143 from the axis of rotation 131 of the tire.

Fig. 3 shows a speed profile of the conveying speed v(itsd) of the intermediate transport supply device 104 versus time t as well as the speed profile of the conveying speed v(pd) of the positioning device 102 versus time t according to embodiments of the herein disclosed subject matter.

In particular, Fig. 3 shows that the intermediate transport supply device is operated at a first speed v1 with which the second tire 138 (see Fig. 1, Fig. 2) is received from a tire supply device (not shown in Fig. 1). The speed v1 corresponds to the speed of the tire supply device which may be for example the speed of a conveyor belt of a manufacturing line into which the tire marking device 100 is integrated. As can be further taken from Fig. 3, according to an embodiment after handover of the second tire from the tire supply device to the intermediate transport supply device 104, starting at time t0, the second tire 136 is moved at the first speed v1 to the end of the intermediate transport supply device 104 (e.g. in to a handover position). However, since this movement is not time critical, according to a further embodiment after handover of the second tire from the tire supply device to the intermediate transport supply device 104 the second tire 136 is moved at any speed (may be a freely chosen or selectable speed) to the end of the intermediate transport supply device 104. In accordance with an embodiment, the second tire reaches the end of the intermediate transport supply device 104 (e.g. the handover position) at a time t1, at which the intermediate transport supply device 104 is stopped. In the meantime (not shown in Fig. 3) the first tire 108, which has been positioned by the positioning device 102 into the marking position with a speed v2 and arrived at the marking position at time t2, is marked with the laser device 106. In accordance with an embodiment, the marking of the first tire 108 ends at a time t3. At t3, the positioning device 102 is activated again to transport the first tire 108 out of the marking position for discharging the first tire 108 from the positioning device 102. At a time t4 the intermediate transport supply device 104 is activated to handover the second tire 136 to the positioning device 102. According to an embodiment t3 equals t4. According to a further embodiment t4 is later than t3, e.g. if the first tire has a bigger diameter than the second tire. For a controlled handover, it is desirable that during the handover of a tire (e.g. the second tire 136 in the described example) the speed of the intermediate transport supply device 104 and the speed of the positioning device is the same, e.g. v2 in the example shown in Fig. 3. Accordingly, at the time t4 the intermediate transport supply device is activated with speed v2 until the second tire 136 has been handed over to the positioning device 102. According to an embodiment, handover of the second tire to the positioning device 102 is finished at a time t5. The positioning device 102 continues operation with speed v2 beyond t5 until the second tire 136 reaches the marking position, which according to an embodiment takes place at a time t6.

It is noted that after the time t5 the intermediate transport supply device may start receiving a further tire from the tire supply device (not shown in Fig. 3). However, the handover of a subsequent tire from the tire supply device to the intermediate transport supply device 104 usually is performed after the subsequent tire reaches the marking position (i.e. after t6). It is noted, that the time period t6-t2 corresponds to a cycle time for processing a tire out of a sequence of tires in the tire marking device 100. In this sense t2 is a starting point and t6 is an end point in time of one such cycle, as illustrated in Fig. 3.

According to an exemplary embodiment, the cycle time for transporting a tire through the tire marking device and the marking of the tire (= t6-t2) is in the range of 5 seconds to 25 seconds, e.g. 15 seconds. According to an embodiment the handhover time (= t5-t4) is smaller than 1 second, in particular smaller than 0.5 seconds.

It is noted that, while in Fig. 3 the speed profiles are shown as rectangular profiles, a person of ordinary skill in the art understands that rectangular speed profiles can only be achieved approximately since a vertical line in the speed profile would correspond to an infinite acceleration. However, in a real system only finite accelerations are possible and hence the rectangular profiles shown in Fig. 3 are smeared out in reality. Further the positioning in the conveying direction 120 cannot be performed with maximum possible acceleration/deceleration because of the delay times from sensor communication as well as a certain degree of overtravel of the conveyor when changing from acceleration to deceleration. This is the reason why the speeds v1 and v2 are also referred to as first maximum speed and second maximum speed. In this regard, the term "maximum" indicates that the referenced speed is the desired speed and at the same time is the maximum speed in the respective speed profile portion.

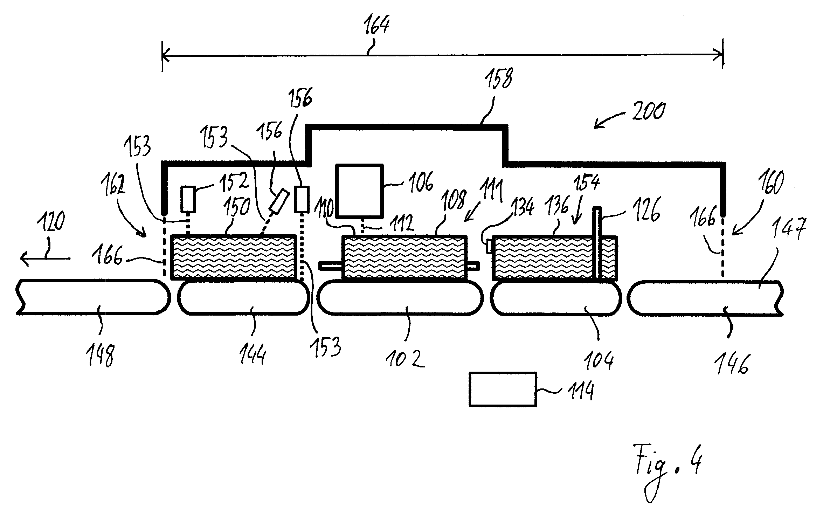

Fig. 4 shows a further tire marking device 200 according to embodiments of the herein disclosed subject matter.

In accordance with an embodiment, the tire marking device 200 comprises a laser device 106 for generating a laser beam 112 for marking of a tire 108, herein also referred to as first tire. Further, the tire marking device comprises an intermediate transport supply device 104, a positioning device 102 and an intermediate transport discharge device 144. Individual elements of the tire marking device are controlled by a control device 114. According to an embodiment, the control device which may comprise one or more control units, each of which may be dedicated to perform one or more functions of the tire marking device described herein.

The intermediate transport supply device 104 is configured for receiving, one after another, a plurality of tires from a tire supply device 146. According to an embodiment, the tire supply device 146 is part of a tire manufacturing line 147 into which the tire marking device 200 is integrated (or is to be integrated). In accordance with an embodiment, the positioning device 102 is configured for receiving a tire from the intermediate transport supply device 104. In accordance with an embodiment, the intermediate transport discharge device 144 is configured for receiving a marked tire from the positioning device 102. In accordance with an embodiment, the intermediate transport discharge device 144 is further configured for providing (e.g. handing over) the marked tire to a tire discharge device 148. In accordance with an embodiment, the tire discharge device 148 is part of the tire manufacturing line 147.

In Fig. 4 three tires are exemplarily shown, the aforementioned first tire 108, the subsequent second tire 136 and a preceding third tire 150. In accordance with an embodiment, the control device 114 is configured for operating the intermediate transport supply device 104 and the positioning device 102 in order to move the second tire to the treatment position 111 and simultaneously remove the first tire from the treatment position 111. In accordance with an embodiment, the intermediate transport supply device 104 is operated at a first speed v1 during a handover of a tire from the tire supply device 146 to the intermediate transport supply device 104. In accordance with a further embodiment, the intermediate transport supply device 104 is operated at a second speed v2 during a handover of a tire from the intermediate transport supply device 104 to the positioning device 102. In accordance with an embodiment, the second speed v2 is higher than the first speed v1. For example, according to an embodiment the second speed v2 is 20% higher than the first speed v1. According to another embodiment, the second speed v2 is 30%, 50% or 70% higher than the first speed v1. The different speeds allow for an easy integration into the tire manufacturing line 147. For example, the first speed v1 may be determined by other devices of the tire manufacturing line 147 or by the fact that the tire manufacturing line 147 has been planned or built before the tire marking device was decided to be integrated into the tire manufacturing line 147, just to name some examples. According to a further embodiment, the second speed v2 is the maximum achievable speed or the maximum suitable speed of the positioning device 102. According to an embodiment, during handover of a tire from the intermediate transport discharge device 144 to the tire discharge device 148 the intermediate transport discharge device 144 is also operated at the first speed v1. The reasons may be the same as described above with regard to the handover of a tire from the tire supply device 146 to the intermediate transport supply device 104.

Further sensors may be provided for improving the operation of the tire marking device according to embodiments of the herein disclosed subject matter. For example, an entrance sensor (e.g. in the form of a light barrier) may be provided at the entrance of the tire marking device for determining that the respective tire sensed has entered the tire marking device. For example, according to an embodiment such a light barrier (or plurality of light barriers in case of a light array) may be realized by the light barrier 126 described above.

Further, an exit sensor 152 (e.g. comprising a light barrier 153) may be provided for determining that the tire sensed has left the tire marking device 200.

According to a further embodiment, there may be provided a sensor 134 determining that the tire is in a position ready for handover from the intermediate transport supply device 104 to the positioning device 102. This sensor 134 may also be referred to as handover ready sensor. This allows for a movement of a second tire 136 to a handover position 154 at the end of the intermediate transport supply device 104 independent from positioning movements of the positioning device 102. In particular, this allows for transport of the second tire 136 to the handover position 154 during positioning of the first tire 108 on the tire positioning device 102 and the marking of the first tire 108 with the laser device 106.

Further, according to an embodiment there is provided at least one sensor 156 (e.g. comprising a light barrier 153) for determining whether the intermediate transport discharge device 144 has capacity for taking up the third tire 150. According to an embodiment, the at least one sensor 156 is configured for determining whether or not the intermediate transport discharge device 144 is free of any preceding tire. According to an embodiment, the exit sensor 152 described above also serves for determining whether the intermediate transport discharge device 144 has capacity for taking up the third tire 150.

According to an embodiment, the intermediate transport discharge device and the positioning device 102 are operated in order to remove the first tire 108 from the treatment position 111 and to simultaneously move the second tire to the treatment position 111 (this situation is not shown in Fig. 4).

According to an embodiment, the tire marking device 200 comprises a shield 158 for at least partially shielding laser radiation originating from the laser device 106. In accordance with an embodiment, the shield 158 comprises a first opening 160 for a transport of a tire therethrough to the treatment position 111 and a second opening 162 for providing the tire therethrough out of the treatment position 111. According to an embodiment, the shield 158 extends over the positioning device 102. According to a further embodiment, the shield 158 extends over at least part of the intermediate transport supply device 104, e.g. over the entire intermediate transport supply device 104. According to a further embodiment, the shield 158 extends over at least part of the tire supply device 146, as shown in Fig. 4. Further according to an embodiment, the shield extends over at least part of the intermediate transport discharge device 144. According to a further embodiment, the shield extends over the entire intermediate transport discharge device 144.

According to a further embodiment, the shield 158 extends over at least part of the tire discharge device 148. A length 164 of the shield 158 may be chosen depending on e.g. the power of the laser device 106, on the material of the tire 108, and the wavelength of the laser radiation. Generally, the longer the shield 158 (i.e. the larger the length 164 of the shield 158), the higher can be the power of the laser radiation 112 emitted by the laser device 106 without violating laser safety provisions. Generally, the stray radiation depends on the material on which the laser beam 112 impinges. However, for rubber the stray radiation is relatively low. Further, a risk for the eyes of persons working in the vicinity of the tire marking device depends on the wavelength of the laser radiation 112. For example, the threshold for a YAG laser is considerably lower than for a carbon dioxide laser since the laser radiation of the YAG laser is absorbed rather on the retina than on the cornea.

In accordance with an embodiment, a curtain 166 is provided over one or both of the openings 160, 162. According to an embodiment, the curtain 166 comprises a plurality of stripes, wherein the stripes extend into the direction of gravity. According to a further embodiment, instead of a curtain a movable closure is provided for one or more of the openings 160, 162. For example, according to an embodiment the movable closure is pivotable by the tire being moved past the movable closure, the movable closure thereby clearing the conveying path of the tire. According to a further embodiment, the openings 160, 162 are maintained clear during the entire operation of the laser marking device, in particular during operation of the laser device 106.

According to an embodiment, the tire marking device is configured for marking both sides (flanks) of a tire. To this end, a flip station may be provided, e.g. integrated into the intermediate transport discharge device 144. According to an embodiment the flip station (not shown in Fig. 4) allows for flipping over the tire such that a marked treatment portion 110 is then positioned facing the positioning device 102 and allowing the opposite flank of the tire to be marked. In accordance with an embodiment, having a flip station, the tire marking device and in particular the intermediate transport discharge device 144 and the positioning device 102 are configured for being operable in both directions, in the conveying direction 120 as well as in the opposite direction for transporting a tire from the intermediate transport discharge device 144 again to the positioning device 102 four marking of the opposite flank of the tire. According to another embodiment, a storage device for storing marked tires is provided in conveying direction 120 after the positioning device 102 in order to allow two or more tires to be marked on one side (one flank) of the tire before the marked tires are transported back to the positioning device for marking of the opposite flank of the tires. In accordance with an embodiment, a digital code sensor, such as the sensor 130 described with regard to Fig. 1, may also be provided below the upper surface of one of the intermediate transport supply device 104, the positioning device 102 and the intermediate transport discharge device 144.

In accordance with an embodiment, two or more tire positioning devices 200 may be located sequentially one after the other. For example, in order to reduce the processing time to consecutive positioning devices 200 may be operated in the following way: a first tire may be transported through a first tire marking device and into a second tire marking device and a second tire may be transported into the first marking device; both tires are marked by a laser device of the respective tire marking device, during at least overlapping time periods; and, subsequently, removing the first tire and the second tire from the first and second marking device.

According to a further embodiment, a quality control device (not shown in Fig. 4) is provided, the quality control device being configured for determining the quality of the marking of the tire performed by the tire marking device.

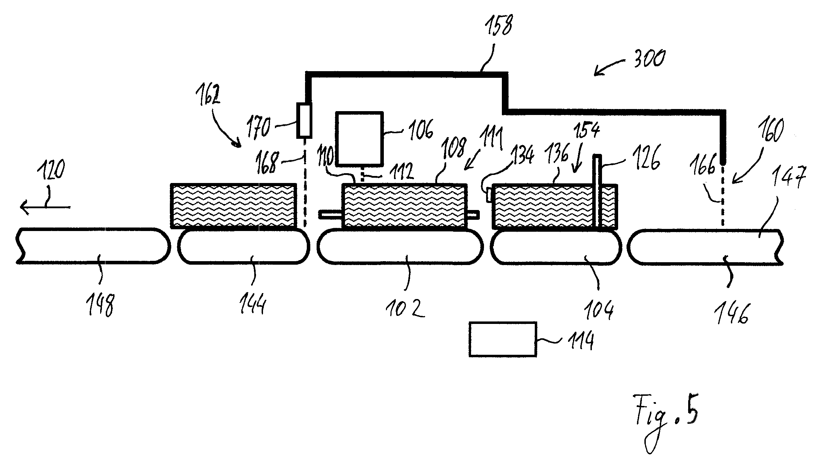

Fig. 5 shows a further tire marking device 300 according to embodiments of the herein disclosed subject matter.

In accordance with an embodiment, the tire marking device 300 comprises a moveable door 168, e.g. a lift door, at the second opening 162. According to a further embodiment, the shield 158 extends only over the intermediate transport supply device 104 and the positioning device 102, as shown in Fig. 5. Hence, according to an embodiment, the second opening 162 is located at the end of the positioning device 102. According to a further embodiment, the tire marking device comprises an actuator 170 for moving the moveable door 168. According to an embodiment, the control device 114 is configured for operating the actuator 170 so as to move the moveable door 168 to a closed position and maintain the closed position during marking of the tire (e.g. during operation of laser device 106), as shown in Fig. 5. According to a further embodiment, the control device 114 is configured for operating the actuator 170 so as to move the moveable door 168 to an open position (not shown in Fig. 5), for discharging the marked tire through the second opening 162.

The remaining elements shown in Fig. 5 correspond to those of Fig. 4 and the description thereof is not repeated here.

It should be noted that any entity disclosed herein (e.g. components, units and devices) are not limited to a dedicated entity as described in some embodiments. Rather, the herein disclosed subject matter may be implemented in various ways and with various granularity on device level or software module level while still providing the specified functionality. Further, it should be noted that according to embodiments a separate entity (e.g. a software module, a hardware module or a hybrid module (combined software/hardware module)) may be provided for each of the functions disclosed herein. According to other embodiments, an entity (e.g. a software module, a hardware module or a hybrid module) is configured for providing two or more functions as disclosed herein. According to still other embodiments, two or more entities are configured for providing together a function as disclosed herein.

Further, although some embodiments refer to a conveyor, a conveyor belt, etc., it should be understood that each of these references is considered to implicitly disclose in addition a respective reference to the respective general term (transport device (e.g. intermediate transport supply device) or positioning device). Also other terms which relate to specific techniques are considered to implicitly disclose the respective general term with the specified functionality.

Further, it should be noted that while the exemplary tire marking devices in the drawings comprise a particular combination of several embodiments of the herein disclosed subject matter, any other combination of embodiment is also possible and is considered to be disclosed with this application and hence the scope of the herein disclosed subject matter extends to all alternative combinations of two or more of the individual features mentioned or evident from the text. All of these different combinations constitute various alternative examples of the invention.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate some of the above described embodiments of the present invention one can state:

A tire marking device comprises a control device 114; a laser device 106; a tire positioning device 102 for positioning a first tire 108 with respect to the laser device 106 into a treatment position 111 to allow a marking of a marking region 110 of the first tire 108 with the laser device 106; an intermediate transport supply device 104, the intermediate transport supply device 104 being configured to be located for providing a second tire 136 to the tire positioning device 102; and a control device 114, the control device 114 being configured for operating the intermediate transport supply device 102 and the positioning device 102 in order to move the second tire 136 to the treatment position 111 and simultaneously remove the first tire 108 from the treatment position 111.

## Claims

1. Tire marking device (100, 200) comprising:
a laser device (106);
a tire positioning device (102) for positioning a first tire (108) with respect to the laser device into a treatment position (111) to allow a marking of a marking region of the first tire (108) with the laser device (106);
an intermediate transport supply device (104), the intermediate transport supply device (104) being configured for providing a second tire (136) to the tire positioning device (102); and
a control device (114), the control device (114) being configured for operating the intermediate transport supply device (104) and the positioning device (102) in order to move the second tire (136) to the treatment position (111) and simultaneously remove the first tire (108) from the treatment position (111).

2. Tire marking device (100, 200) according to the preceding claim, wherein
the control device (114) is configured for operating the intermediate transport supply device (104) depending on a type of the first tire (108) and/or the second tire (136), wherein the type of the respective tire (108, 136) comprises at least one of:
a diameter (129) of the tire perpendicular to its tire axis (131) of rotation;
a width (128) of the tire parallel to the tire axis (131) of rotation;
a radial distance (143) of the marking region (110) from the tire axis (131) of rotation.

3. Tire marking device (100, 200) according to any one of the preceding claims, wherein
the intermediate transport supply device (104) comprises a first conveyor (137), the first conveyor (137) comprising in particular a first conveyor belt (138); and
the tire positioning device (102) comprises a second conveyor (117), the second conveyor (117) comprising in particular a second conveyor belt (118).

4. Tire marking device (100, 200) according to claim 3, wherein
the second conveyor (117) has a maximum clearance (142) in a direction (121) perpendicular to the conveying direction (120) of the second conveyor (117); and
the second conveyor (117) has a length which is smaller than 1.3 times the maximum clearance (142) in particular smaller than 1.1 times the maximum clearance (142) or smaller than 0.9 times the maximum clearance (142).

5. Tire marking device (100, 200) according to anyone of claims 3 or 4, wherein the control device (114) is configured for
operating the first conveyor (137) at a first maximum speed v1 during receiving the second tire (136) from a tire supply device (146); and
operating the first conveyor (137) at a second maximum speed v2 during providing the second tire (136) to the second conveyor (117);
wherein v2 > 1.2 * v1.

6. Tire marking device (100, 200) according to claim 5, wherein the control device (114) is configured for at least one of:
operating the first conveyor (137) for the transporting of the second tire (136) to the second conveyor (117) during marking of the first tire (108) and/or during a fine positioning of the first tire (108).

7. Tire marking device (100, 200) according to any one of the preceding claims, further comprising
an intermediate transport discharge device (144) configured to be located for taking up marked tires from the positioning device (102);
a discharge clearing sensor (152, 156);
wherein the control device (114) is configured for operating the intermediate transport discharge device (144) for receiving a preceding, third tire (150) from the positioning device (102) only if the discharge clearing sensor (152, 156) indicates that the intermediate transport discharge device (144) has capacity for taking up the third tire (150).

8. Tire marking device (100, 200) according to any one of the preceding claims, further comprising
a shield (158) for at least partially shielding laser radiation, the shield (158) having a first opening (160) for a transport of the tire therethrough to the treatment position (111) and/or a second opening (162) for providing the tire therethrough out of the treatment position (111), wherein in particular the shield (158) extends over the positioning device (102) and at least part of the intermediate transport supply device (104).

9. Method of operating a tire marking device (100, 200), the tire marking device (100, 200) comprising: a laser device (106); a tire positioning device (102) for positioning a first tire (108) with respect to the laser device (106) into a treatment position (111) to allow a marking of the first tire (108) with the laser device (106); an intermediate transport supply device (104), the intermediate transport supply device (104) being located for providing a second tire (136) to the tire positioning device (102); the method comprising:
operating the intermediate transport supply device (104) and the positioning device (102) in order to move the second tire (136) to the treatment position (111) and simultaneously remove the first tire (108) from the treatment position (111).

10. Method according to claim 9, further comprising:
operating the intermediate transport supply device (104) depending on a type of the first tire (108) and/or the second tire (136), wherein the type of the respective tire comprises at least one of: (i) a diameter (129) of the tire perpendicular to the tire axis (131) of rotation, (ii) a width (128) of the tire parallel to the tire axis (131) of rotation, and (iii) a radial distance (143) of the marking region from the tire axis of rotation;
wherein the method further comprises in particular:
if the first tire (108) has a first diameter larger than a second diameter of the second tire (136), providing the second tire (136) to the positioning device (102) not before the first tire (108) on the positioning device (102) is sufficiently spaced from the second tire (136) such that the first tire (108) is released from the tire positioning device (102) if the second tire (136) is in the treatment position (111); and/or
if first tire (108) has a first width and the second tire (136) has a second width larger than the first width, providing the second tire (136) to the positioning device (102) so as to allow the laser device (106) to move out of the range of the second tire (136) before the second tire (136) reaches the treatment position (111).

11. Method according to any one of claims 9 or 10, the tire marking device (100, 200) further comprising an intermediate transport discharge device (144) configured to be located for taking up marked tires from the positioning device (102), the method further comprising at least one of:
operating the intermediate transport discharge device (144) for providing a preceding, third tire (150) to a tire discharge device (148) only if the tire discharge device (148) has capacity for taking up the third tire (150).

12. Method according to any one of claims 9 to 11, further comprising:
operating the intermediate transport supply device (104) for transporting the second tire (136) towards the positioning device (102) before operating the positioning device (102) for removal of the first tire (108) from the treatment position (111).

13. Method according to any one of claims 9 to 12, the intermediate transport supply device (104) comprising a first conveyor (137), the first conveyor (137) comprising in particular a first conveyor belt (138); and the tire positioning device (102) comprising a second conveyor (117), the second conveyor (117) comprising in particular a second conveyor belt (118); the method further comprising:
operating the first conveyor (137) at a first maximum speed v1 during receiving the second tire (136) from a tire supply device (146); and
operating the first conveyor (137) at a second maximum speed v2 during providing the second tire (136) to the second conveyor (117);
wherein v2 > 1.2 * v1.

14. Computer program product comprising a program element which is configured for, when carried out on a processor device (115), executing a method according to any one of claims 9 to 13.

15. Control device (114) for a tire marking device (100, 200), the control device (114) being configured for operating a tire marking device (100, 200) according to a method of any one of claims 9 to 13.
